Europäisches Patentamt

European Patent Office

Office européen des brevets

(19)

(11) Veröffentlichungsnummer: **0 184 084**
**B1**

(12) **EUROPÄISCHE PATENTSCHRIFT**

(45) Veröffentlichungstag der Patentschrift:
08.02.89

(21) Anmeldenummer: 85114836.1

(22) Anmeldetag: 22.11.85

(51) Int. Cl.⁴: **E 03 B  7/07**, E 03 C  1/02

(54) **Anschlussarmatur für Wasseraufbereitungsanlagen.**

(30) Priorität: 06.12.84  DE 3444578

(43) Veröffentlichungstag der Anmeldung:
11.06.86 Patentblatt 86/24

(45) Bekanntmachung des Hinweises auf die Patenterteilung:
08.02.89 Patentblatt 89/6

(84) Benannte Vertragsstaaten:
AT BE CH DE FR GB IT LI LU NL SE

(56) Entgegenhaltungen:
BE-A- 893 735
DE-A- 1 915 434
FR-A- 2 273 315
FR-A- 2 285 499
FR-A- 2 353 780
US-A- 2 873 083
US-A- 3 185 170

(73) Patentinhaber: Grünbeck Wasseraufbereitung GmbH,
Industriestrasse 1, D-8884 Höchstädt/Donau (DE)

(72) Erfinder: **Arens, Hans, Uhlandweg 6, D-8857 Wertingen
(DE)**
Erfinder: **Kern, Hans, Wimpasing 4, Vachendorf (DE)**

(74) Vertreter: **Prüfer, Lutz H., Dipl.-Phys., Harthauser
Strasse 25d, D-8000 München 90 (DE)**

EP 0 184 084 B1

## Beschreibung

Die Erfindung betrifft eine Anschlussarmatur für Wasseraufbereitungsanlagen nach dem Oberbegriff des Anspruches 1.

Eine derartige Anschlussarmatur ist insbesondere zum Anschluss von Aufbereitungsvorrichtungen wie Ionenaustauschern im Hauswasserbereich dann einsetzbar, wenn eine Wasseraufbereitung wie beispielsweise eine Wasserenthärtung vorgenommen werden soll. Dazu wird zwischen den Ablaufanschluss und den Zulaufanschluss ein Ionentauscher geschaltet, der dem aufzubereitenden Wasser Kalk entzieht und damit Weichwasser mit geringer Wasserhärte, ca. 0° dH, erzeugt. Da dieses Weichwasser für den Gebrauch als Trinkwasser ungeeignet ist, wird in bestimmtem Mass wieder unbehandeltes Wasser zugemischt (verschnitten), um eine gewünschte Härte, beispielsweise 8° dH, zu erhalten. Dem so erzeugten Wasser werden dann zur Vermeidung von Leitungskorrosionen mittels eines Dosiergeräts Zusatzstoffe zugemischt.

Aus der BE-A-893 735 ist eine Anschlussarmatur der eingangs beschriebenen Art bekannt. Bei dieser Armatur ist in dem in dem Gehäuse angeordneten Zulaufkanal ein Kolben angeordnet. Das Wasser muss in die den Kolben aufnehmende Kammer eintreten und wieder austreten und kann dann schliesslich seitwärts in eine Wasseraufbereitungsanlage eintreten. In dem in dem Gehäuse angeordneten Ablaufkanal ist ein weiterer Teil des Kolbens angeordnet. Das Wasser muss durch die diesen Teil des Kolbens aufnehmende Kammer fliessen, bevor es zu dem Ablauf gelangen kann. Der Kolben bei der bekannten Armatur kann so bewegt werden, dass er entweder eine Verbindung zwischen dem Zulaufkanal und dem Ablaufkanal öffnet oder dass er sie schliesst. Damit ist jedoch keine Steuerung der durch diesen Nebenschluss fliessenden nichtbehandelten Wassermenge möglich.

Es ist daher Aufgabe der Erfindung, eine Anschlussarmatur der eingangs beschriebenen Art zu schaffen, die einen kompakten Aufbau besitzt und auch unter beengten Platzverhältnissen eingebaut werden kann. Darüber hinaus soll die Härteeinstellung einstellbar sein und die Armatur auch bei mengenproportionalen Anlagen verwendet werden können.

Diese Aufgabe wird durch eine Anschlussarmatur der eingangs beschriebenen Art gelöst, die durch die Merkmale des kennzeichnenden Teiles des Anspruches 1 gekennzeichnet ist.

Weitere Merkmale der Erfindung sind in den Unteransprüchen gekennzeichnet.

Weitere Einzelheiten der Anschlussarmatur ergeben sich aus der Beschreibung eines Ausführungsbeispiels im Zusammenhang mit den Figuren. Von den Figuren zeigen:

Fig. 1 ein schematisches Schaltbild der an eine Wasseraufbereitungsanlage angeschlossenen Anschlussarmatur;

Fig. 2 einen Längsschnitt durch eine Ausführungsform der Anschlussarmatur;

Fig. 3 einen Schnitt durch das Zumischventil der Anschlussarmatur nach Fig. 2 in einer ersten Durchflussstellung; und

Fig. 4 einen Schnitt durch das Zumischventil der Anschlussarmatur nach Fig. 2 in einer zweiten Durchflussstellung.

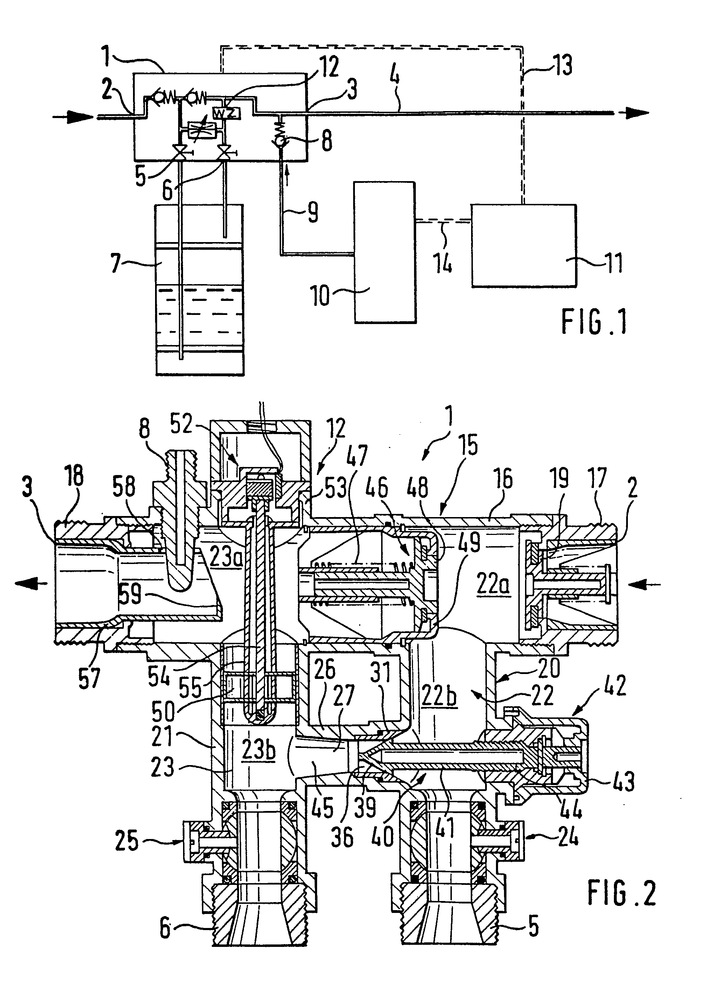

Fig. 1 zeigt in schematischer Darstellung die Anschlussarmatur 1, die mit einem Zulauf 2 und einem Ablauf 3 in eine Wasserleitung 4 eingebaut ist und über einen Ablaufanschluss 5 und einen Zulaufanschluss 6 an eine Wasseraufbereitungsvorrichtung 7 in Form eines Ionenaustauschers angeschlossen ist. Ein Dosierventil 8 in der Anschlussarmatur 1 ist über eine Dosierleitung 9 mit einem Dosiergerät 10 verbunden. Eine Steuerung 11 ist eingangsseitig mit einem in der Anschlussarmatur 1 vorgesehenen Durchflussmesser 12 über eine Leitung 13 und ausgangsseitig über eine Leitung 14 mit dem Dosiergerät 10 zur mengenproportionalen Zudosierung von Zusatzstoffen verbunden.

In Fig. 2 ist eine bevorzugte Ausführungsform einer Anschlussarmatur im Längsschnitt im Detail dargestellt, wobei sich im Gegensatz zu Fig. 1 der Zulauf 2 rechts und der Ablauf 3 links befindet. Die Anschlussarmatur 1 weist ein Gehäuse 15 mit einem rohrförmigen Teil 16 auf, an dessen einem Ende der Zulauf 2 und an dessen anderem Ende koaxial zum Zulauf 2 der Ablauf 3 mit jeweils einer Verschraubung 17, 18 angeordnet ist. In der zulaufseitigen Verschraubung 17 ist ein federbelastetes Rückschlagventil 19 angeordnet, das den Durchfluss durch den Zulauf erst bei Überschreiten eines vorbestimmten Drucks erlaubt.

Das Gehäuse 16 weist ferner zwei Abzweigrohre 20, 21 auf, die vom rohrförmigen Teil 16 unter einem rechten Winkel zur Achse des rohrförmigen Teils 16 seitlich abstehen und in einem Abstand parallel zueinander angeordnet sind. Das erste Abzweigrohr 20 umschliesst einen mit dem Zulauf 2 verbundenen Zulaufkanal 22 mit einem an den Zulauf 2 angrenzenden ersten Bereich 22a innerhalb des Teils 16 und einem davon unter einem rechten Winkel abzweigenden zweiten Bereich 22b innerhalb des ersten Abzweigrohres 20 und trägt an seinem freien Ende den Ablaufanschluss 5. Das zweite Abzweigrohr 21 umschliesst einen mit dem Ablauf 3 verbundenen Ablaufkanal 23 mit einem an den Ablauf 3 angrenzenden ersten Bereich 23a in Längsrichtung des Teils 16 und einen davon unter einem rechten Winkel abzweigenden und sich parallel zum zweiten Bereich 22b erstreckenden zweiten Bereich 23b innerhalb des zweiten Abzweigrohres 21 und trägt an seinem freien Ende den Zulaufanschluss 6. Angrenzend an den Ablaufanschluss 5 bzw. den Zulaufanschluss 6 in Richtung zum rohrförmigen Teil 16 hin weisen die beiden Abzweigrohre 20, 21 jeweils Absperrventile 24, 25 in Form von Kugelhähnen auf.

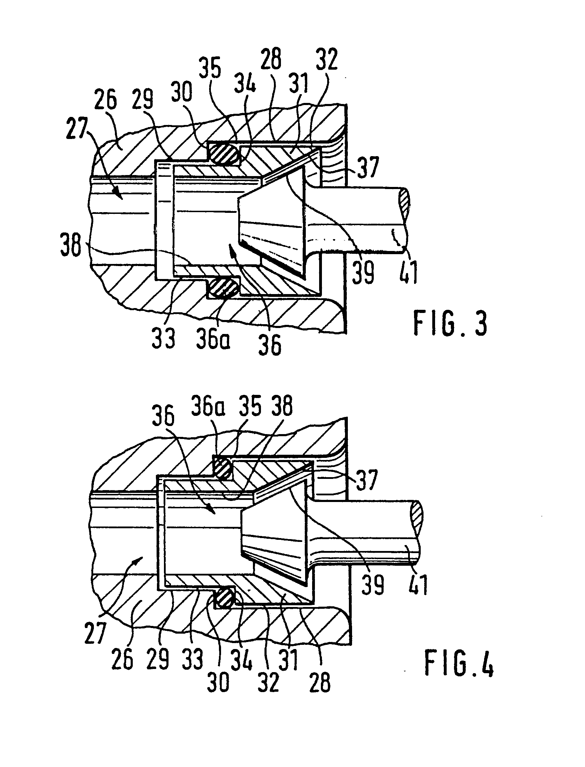

In einem Abstand vom rohrförmigen Teil 16 sind die beiden Abzweigrohre 20, 21 durch ein Verbindungsrohr 26 verbunden, das einen Verbindungskanal 27 zwischen dem Zulaufkanal 22 und dem Ablaufkanal 23 umschliesst und dessen Achse im wesentlichen parallel zur Achse des rohrförmigen Teils 16 und senkrecht zu den Abzweigrohren 20, 21 angeordnet ist. Das Verbindungsrohr 26 weist an seiner Innenfläche angrenzend an das erste Abzweigrohr 20 einen ersten zylindrischen Bereich 28 mit einem ersten Durchmesser und daran anschliessend einen zweiten zylindrischen Bereich 29 mit einem gegenüber dem ersten zylindrischen Bereich 28 verringerten Durchmesser auf, wodurch zwischen dem ersten zylindrischen Bereich 28 und dem zweiten zylindrischen Bereich 29 ein stufenförmiger Absatz 30 gebildet wird. In den ersten zylindrischen Bereich 28 und zweiten zylindrischen Bereich 29 ist in der am besten aus Fig. 3 ersichtlichen Weise eine zylindrische Buchse 31 mit einem an das erste Abzweigrohr 20 angrenzenden ersten Bereich 32 mit einem ersten Durchmesser und einem daran anschliessenden zweiten Bereich mit einem gegenüber dem ersten Durchmesser verringerten Durchmesser eingesetzt. Die Durchmesser des ersten Bereichs 32 und des zweiten Bereichs 33 sind so gewählt, dass der erste Bereich 32 der Buchse 31 im ersten zylindrischen Bereich 28 und der zweite Bereich 33 der Buchse 31 im zweiten zylindrischen Bereich 29 verschiebbar geführt sind und zwischen dem ersten Bereich 32 und dem zweiten Bereich 33 eine ringförmige Anlagefläche 34 gebildet ist. In einem Ringraum 35, der axial von der Anlagefläche 34 und dem Absatz 30 und radial innen vom zweiten Bereich 33 der Buchse 31 und aussen vom ersten zylindrischen Bereich 28 und des Verbindungsrohres 26 gebildet ist, ist ein O-Ring 36a aus elastisch verformbarem Material angeordnet.

Die Innenfläche der Buchse 31 umschliesst einen ersten Bereich 36 des Verbindungskanals 27 und weist an der dem Zulaufkanal 22 zugewandten Seite einen konischen Bereich 37 und daran anschliessend einen zylindrischen Bereich 38 auf. Der konische Bereich 37 bildet einen Ventilsitz für einen Ventilkegel 39 eines Verschneide- bzw. Zumischventils 40. Der Ventilkegel 39 ist an einem Ende eines Ventilschaftes 41 angeordnet, der sich in Richtung der Achse des Verbindungskanals 27 und senkrecht zum ersten Abzweigrohr 20 bzw. zum Zulaufkanal 22 durch dieses bzw. diesen hindurch erstreckt und an seinem anderen Ende auf der dem Verbindungsrohr 26 gegenüberliegenden Seite des ersten Abzweigrohrs 20 mit einer Einstellvorrichtung 42 zur axialen Verschiebung des Ventilschaftes 41 bzw. Ventilkegels 39 verbunden ist. Zu diesem Zweck weist die Einstellvorrrichtung 42 einen mittels eines Drehknopfes 43 betätigbaren Schrauben- oder Spindelantrieb 44 auf.

An den ersten Bereich 36 des Verbindungskanals 27 schliesst sich auf der an den Ablaufkanal 23 angrenzenden Seite ein zweiter Bereich 45 an, der als ein Diffusor mit einem sich vom Durchflussquerschnitt des ersten Bereichs 36 zum Ablaufkanal 23 hin erweiternden Durchmesser ausgebildet ist. Der Abstand des ersten Abzweigrohrs 20 vom zweiten Abzweigrohr 21 ist derart gewählt, dass das Verbindungsrohr 26 eine solche Länge aufweisen kann, dass es die Buchse 31 und den Diffusor 45 aufnimmt, und dass im rohrförmigen Teil 16 zwischen dem ersten Abzweigrohr 20 und dem zweiten Abzweigrohr 21 ein Bypassventil 46 Platz findet, das einen dem Zulauf entgegengerichteten und gegen den Zulauf mittels einer Feder 47 vorgespannten Ventilteller 48 aufweist, der im geschlossenen Zustand des Bypassventils 46 gegen einen im rohrförmigen Teil 16 dicht eingesetzten Anschlag 49 anliegt.

Im zweiten Abzweigrohr 21 ist an einer Stelle zwischen dem rohrförmigen Teil 16 und dem Verbindungsrohr 26 ein Flügelrad 50 für einen Durchflussmesser 12 angeordnet. Das Flügelrad 50 ist auf einer Welle 54 befestigt, die sich in Richtung des zweiten Abzweigrohrs 21 quer durch das rohrförmige Teil 16 hindurcherstreckt und an ihrem anderen Ende mit einem Drehzahlaufnehmer 52 in Form eines Impulsabnehmers verbunden ist. Der Drehzahlaufnehmer ist in einem seitlichen Ansatz 53 des Gehäuses 15 angeordnet, der auf der dem zweiten Abzweigrohr 21 gegenüberliegenden Seite des rohrförmigen Teils 16 angeordnet ist. Zur Lagerung und zum Schutz der Welle 54 dient ein im wesentlichen zylindrisches Gehäuse 55, das die Welle 54 umgibt und sich an seinem einen Ende im Ansatz 54 und an seinem anderen Ende im zweiten Abzweigrohr 21 abstützt.

Zwischen dem Ablauf 3 und der Einmündungsstelle des zweiten Abzweigrohrs 21 in das rohrförmige Teil 16 ist in dieses ein Dosierventil 8 zum Anschluss an die Dosierleitung 9 eingeschraubt. Um ein Abtropfen von Dosiermittel direkt an die Innenseite des Gehäuses 15 zu vermeiden, ist in das rohrförmige Teil 16 von der Ablaufseite 3 her eine im wesentlichen zylindrische Dosierbuchse 57 eingesetzt, deren Länge so gewählt ist, dass sie sich in das rohrförmige Teil 16 über die Stelle, an der das Dosierventil 8 angeordnet ist, hinaus hineinerstreckt, und die an der dem Dosierventil 8 entsprechenden Stelle eine Ausnehmung 58 aufweist, durch die das Dosierventil mit seinem Ende radial in die Dosierbuchse 57 hineinragt. Die Dosierbuchse 57 weist schliesslich an ihrem vom Ablauf 3 abgewandten Ende eine Wand 59 auf, die sich von der Unterseite der Dosierbuchse 57 radial nach innen erstreckt und damit ein Ablaufen von Dosiermittel in das Gehäuse 15 verhindert.

Im Betrieb wird die Anschlussarmatur 1 mit ihrem koaxialen Zulauf 2 und Ablauf 3 in eine Wasserleitung 4 eingesetzt und die Wasseraufbereitungsvorrichtung 7 an den Ablaufanschluss 5 bzw. den Zulaufanschluss 6 angeschlossen. Das Rückschlagventil 19 und das Bypassventil 46 sind so eingestellt, dass das Rückschlagventil 19 bei einem ersten Druck und das Bypassventil 46 bei einem zweiten Druck, der grösser ist als der erste Druck, öffnet. Liegt nun der einlaufseitige Druck zwischen dem ersten und dem zweiten Druckwert, so strömt das aufzubereitende Wasser durch das geöffnete Rückschlagventil 19 und den Zulaufkanal 22 in die Wasseraufbereitungsvorrichtung 7 und das von dieser aufbereitete Weichwasser durch den Ablaufkanal 23, die Dosierbuchse 57 und den Ablauf 3 zum Verbraucher. Die Durchflussmenge des aufbereiteten Weichwassers wird vom Durchflussmesser 12 gemessen und ein entsprechendes Signal über die Leitung 13 an die Steuerung 11 abgegeben. Diese steuert daraufhin das Dosiergerät 10 derart, dass in einer gewünschten Weise, beispielsweise mengenproportional, Dosiermittel über das Dosierventil in das aufbereitete Weichwasser eindosiert wird, um Leitungskorrosionen zu vermeiden.

Der Verbindungskanal 27 mit dem Zumischventil 40 wirken als ein einstellbarer Bypass zur Wasseraufbereitungsvorrichtung 7, um einen einstellbaren Teil des unbehandelten bzw. nicht enthärteten Wassers dem behandelten bzw. enthärteten Wasser zu-

3

zumischen, um damit eine gewünschte Härte des aufbereiteten Wassers zu erhalten. Zu diesem Zweck wird für einen bestimmten Durchfluss des zu behandelnden Wassers bzw. des aufbereiteten Wassers das Ventil 40 und damit der Durchflussquerschnitt des Verbindungskanals 27 zwischen dem Ventilkegel 39 und dem konischen Bereich 37 der Buchse 31 so eingestellt, dass ein gewünschter Anteil des aufzubereitenden Wassers vom Zulaufkanal 22 über den Verbindungskanal 27 zum Ablaufkanal 23 strömt. Diese gewünschte Einstellung des Ventils 40 wird beispielsweise durch Messung der Härte des aufbereiteten Wassers erhalten.

Steigt nun beispielsweise aufgrund eines erhöhten Bedarfs die Durchflussmenge durch den Zulaufkanal 22 bzw. den Austauscher 7 und den Ablaufkanal 23, so steigt der Druckabfall über den Austauscher 7 aufgrund dessen Charakteristik nicht in entsprechender Weise an wie der Durckabfall über das Zumischventil 46, falls dessen Einstellung unverändert verbleiben würde. Als Folge davon würde der Bypassdurchfluss über den Verbindungskanal 27 absinken und damit ebenfalls die Härte des aufbereiteten Wassers absinken. Zur Vermeidung dieses Nachteils dient die oben beschriebene Anordnung des Ventilsitzes 37 bzw. der Buchse 31 im Verbindungsrohr 26. Steigt der Durchsatz in der oben beschriebenen Weise an, so erhöht sich damit auch die Druckdifferenz zwischen dem Druck im Zulaufkanal 22 und dem Druck im Ablaufkanal 23. Diese Druckdifferenz wirkt auf die Buchse 31 ein und drückt diese in der in Fig. 4 gezeigten Weise entgegen der Vorspannkraft des O-Ringes 36a in Richtung zum Ablaufkanal 23 bzw. vom Ventilkegel 39 weg, so dass der Bypass-Durchflussquerschnitt zwischen dem Ventilkegel 39 und dem Ventilsitz 37 vergrössert ist und damit die Durchflussmenge des nicht aufbereiteten Wassers durch den Verbindungskanal 27 und damit die dem enthärteten Wasser zugemischte Menge des nicht enthärteten Wassers ansteigt. Die elastische Vorspannkraft des O-Ringes 36a wird nun vorzugsweise so gewählt, dass die vom Ventilkegel 39 und dem Ventilsitz 37 gebildete Drossel eine im wesentlichen gleiche Durchflusscharakteristik in Abhängigkeit des Differenzdruckes aufweist wie die Wasseraufbereitungsvorrichtung bzw. der Ionenaustauscher 7. Sinkt diese Druckdifferenz aufgrund eines verringerten Durchflusses wieder ab, so drückt die elastische Vorspannkraft des O-Rings 36a die Buchse 31 wieder zum Ventilkegel 39 hin und verringert damit den Durchflussquerschnitt. Es soll betont werden, dass das Zumischventil 40 mit der oben beschriebenen Konstruktion und Funktion einen ganz wesentlichen Aspekt der Erfindung darstellt und insbesondere erfindungsgemäss auch als separates Zumischventil unabhängig von der Gesamtarmatur 1 verwendet werden kann.

Da das nicht enthärtete Wasser vom Verbindungskanal 27 in das zweite Abzweigrohr 21 an einer Stelle stromaufwärts des Durchflussmessers 12 bzw. Flügelrads 50 einmündet, misst dieser unabhängig von der eingestellten Härte den gesamten Durchfluss und erlaubt damit eine dem gesamten Durchfluss angepasste Dosierung von Dosiermittel über das Dosiergerät 10.

Übersteigt die Druckdifferenz zwischen Zulauf 2 und Ablauf 3 den zweiten Druckwert, so öffnet das Bypassventil 46 und erlaubt ein Durchströmen von unbehandeltem Wasser vom Zulauf 2 zum Ablauf 3 durch das rohrförmige Teil 16. Damit ist die Wasserversorgung auch bei einer Beschädigung oder Verstopfung der Wasseraufbereitungsvorrichtung sichergestellt.

Damit bietet die erfindungsgemässe Anschlussarmatur 1 den Vorteil, dass alle für den Anschluss einer Wasseraufbereitungsanlage erforderlichen Komponenten in einem Gehäuse integriert sind. Dies gewährleistet einen günstigen Preis, problemlose Montage mit einfachem Aufbau sowie eine kurze Einbaulänge, die insbesondere bei beengten Platzverhältnissen von Vorteil ist. Ferner ergibt sich eine übersichtliche Anordnung und die Verwendbarkeit bei mengenproportionalen sowie bei zeitgesteuerten Anlagen. Insbesondere bleibt die eingestellte Härte unabhängig vom Durchfluss konstant. Dabei kann selbstverständlich das Gehäuse 15 auch eine andere Form besitzen und beispielsweise als ein Block ausgebildet sein, in dem die Kanäle 22, 23 und 27 vorgesehen sind.

**Patentansprüche**

1. Anschlussarmatur (1) für Wasseraufbereitungsanlagen mit einem Gehäuse (15), mit einem Zulauf (2) für aufzubereitendes Wasser und einem Ablauf (3) für aufbereitetes Wasser, mit einem in dem Gehäuse (15) angeordneten, mit dem Zulauf (2) verbunden Zulaufkanal (22) und einem in dem Gehäuse (15) angeordneten, mit dem Ablauf (3) verbundenen Ablaufkanal (23) und mit einem den Zulaufkanal (22) mit dem Ablaufkanal (23) verbindenden Verbindungskanal (27) dadurch gekennzeichnet, dass der Zulaufkanal (22) an seinem dem Zulauf (2) abgewandten Ende mit einem mit dem Eingang einer Wasseraufbereitungsvorrichtung (7) verbindbaren Ablaufanschluss (5) verbunden ist, dass der Ablaufkanal (23) an seinem dem Ablauf (3) abgewandten Ende mit einem mit dem Ausgang der Wasseraufbereitungsvorrichtung (7) verbindbaren Zulaufanschluss (6) verbunden ist und dass der Querschnitt des Verbindungskanals (27) einstellbar ist.

2. Anschlussarmatur nach Anspruch 1, dadurch gekennzeichnet, dass sich der Zulaufkanal (22) im wesentlichen parallel zum Ablaufkanal (23) erstreckt.

3. Anschlussarmatur nach Anspruch 2, dadurch gekennzeichnet, dass das Gehäuse (15) ein rohrförmiges Teil (16), dessen eines Ende den Zulauf (2) und dessen anderes Ende den Ablauf (3) bildet, ein erstes Abzweigrohr (20), das vom Teil (16) seitlich absteht und an seinem freien Ende den Ablaufanschluss (5) trägt, ein zweites Abzweigrohr (21), das vom Teil (16) parallel zum ersten Abzweigrohr (20) zwischen dem ersten Abzweigrohr (20) und dem Ablauf (3) seitlich absteht und an seinem Ende den Zulaufanschluss (6) trägt, und ein Verbindungsrohr (26), das das erste Abzweigrohr (20) mit dem zweiten Abzweigrohr (21) an einer Stelle zwischen dem Teil (16) und dem Ablaufanschluss (5) bzw. Zulaufanschluss (6) verbindet und den Verbindungskanal (27) umschliesst, aufweist.

4. Anschlussarmatur nach Anspruch 2 oder 3, dadurch gekennzeichnet, dass der Verbindungskanal (27) einen an den Zulaufkanal (22) angrenzenden ersten Bereich (36) mit einem Regelventil (37, 39) und zwischen dem ersten Bereich (26) und dem Ablaufkanal (23) einen als Diffusor ausgebildeten zweiten Bereich (45) aufweist.

5. Anschlussarmatur nach Anspruch 4, dadurch gekennzeichnet, dass das Regelventil (37, 39) einen Ventilkegel (39) und einen an einer im Verbindungskanal (27) zum Ventilkegel (39) hin und von diesem weg verschiebbar gelagerten und gegen eine Bewegung vom Ventilkegel (39) weg federnd gehaltenen Ventilsitz (37) aufweist.

6. Anschlussarmatur nach Anspruch 5, dadurch gekennzeichnet, dass der Ventilsitz (37) an einer im Verbindungskanal (27) axial verschiebbar gelagerten Buchse (31) vorgesehen und der Ventilkegel (39) an einem Ventilschaft (41) befestigt ist, welcher sich durch den Zulaufkanal (22) bzw. durch das erste Abzweigrohr (20) hindurcherstreckt und mit einer Einstellvorrichtung (42) verbunden ist, die auf der dem Verbindungskanal (27) bzw. dem Verbindungsrohr (26) abgewandten Seite des ersten Abzweigrohrs (20) bzw. des Zulaufkanals (22) angeordnet ist.

7. Anschlussarmatur nach einem der Ansprüche 2 bis 6, dadurch gekennzeichnet, dass am ersten Abzweigrohr (20) und am zweiten Abzweigrohr (21) jeweils zwischen dem Verbindungsrohr (26) und dem Ablaufanschluss (5) bzw. Zulaufanschluss (6) ein Absperrventil (24, 25) angeordnet ist.

8. Anschlussarmatur nach einem der Ansprüche 2 bis 7, dadurch gekennzeichnet, dass im Teil (16) zwischen der Abzweigstelle des ersten Abzweigrohrs (20) und der Abzweigstelle des zweiten Abzweigrohrs (21) ein Bypasskanal mit einem federvorgespannten Sicherheitsventil (46) angeordnet ist.

9. Anschlussarmatur nach einem der Ansprüche 2 bis 8, dadurch gekennzeichnet, dass im zweiten Abzweigrohr (21) zwischen dem Teil (16) und dem Verbindungsrohr (26) ein Flügelrad (50) eines Wasserzählers angeordnet ist und dass das Flügelrad (50) auf einer Welle (54) angeordnet ist die sich in Richtung des zweiten Abzweigrohrs (21) durch das Teil (16) hindurcherstreckt und auf dessen dem zweiten Abzweigrohr (21) abgewandter Seite mit einem Drehzahlaufnehmer (52) verbunden ist.

10. Anschlussarmatur nach einem der Ansprüche 2 bis 9, dadurch gekennzeichnet, dass am Teil (16) zwischen der Abzweigstelle des zweiten Abzweigrohrs (21) und dem Ablauf (3) ein Dosierventil (8) und eine ein in das Teil (16) hineinragende Ende des Dosierventils (8) ringförmig aufnehmende Dosierbuchse (57) vorgesehen sind.

11. Anschlussarmatur nach einem der Ansprüche 1 bis 10, dadurch gekennzeichnet, dass am Zulauf (2) ein Rückschlagventil (19) angeordnet ist.

## Claims

1. Connecting armature (1) for water-preparing arrangements having a housing (15), comprising an inlet (2) for water to be prepared and an outlet (3) for prepared water, a supply channel (22) arranged in the housing (15) and connected with the inlet (2), a discharge channel (23) arranged in the housing (15) and connected with the outlet (3), and a connecting channel (27) connected with the supply channel (22) and the discharge channel (23), characterized in that the supply channel (22) is connected at its end opposite to the inlet (2) to a discharge connection (5) being connectable to the input of a waterpreparing device (7), that the discharge channel (23) is connected at its end opposite to the outlet (3) to a supply connection (6) being connectable to the output of the water-preparing device (7), and that the crosssection of the connecting channel (27) is adjustable.

2. Connecting armature according to claim 1, characterized in that the supply channel (22) extends substantially parallel to the discharge channel (23).

3. Connecting armature according to claim 2, characterized in that the housing (15) comprises a tube-shaped portion (16), one end thereof forming the inlet (2) and the other end thereof forming the outlet (3), a first branching tube (20) projecting laterally from the portion (16) and carrying at the free end thereof the discharge connection (5), a second branching tube (21) projecting lateraylly from the portion (16) parallely to the first branching tube (20) between the first branching tube (20) and the outlet (3) and carrying at the end thereof the supply connection (6), and a connecting tube (26) connecting the first branching tube (20) with the second branching tube (21) at a position between the portion (16) and the discharge connection (5) and the supply connection (6), resp., and surrounding the connecting channel (27).

4. Connecting armature according to claims 2 or 3, characterized in that the connecting channel (27) comprises a first portion (36) having a control valve (37, 39) adjacent to the supply channel (22) and a second portion (45) being formed as a diffusor between the first portion (26) and the discharge channel (23).

5. Connecting armature according to claim 4, characterized in that the control valve (37, 39) comprises a valve cone (39) and a valve seat (37) being displaceably supported within said connecting channel (27) in a direction towards the valve cone (39) and away thereof and which is resiliently supported against a movement away from said valve cone (39).

6. Connecting armature according to claim 5, characterized in that the valve seat (37) is provided at a sleeve (31) being axially displaceably supported within the connecting channel (27) and the valve cone (39) is mounted to a valve shaft (41) which extends through the supply channel (22) or through the first branching tube (20), resp., and which is connected with an adjusting device (42) disposed at the side of the first branching tube (20) or the supply channel (22), resp., opposite to the connecting channel (27) or the connecting tube (26) resp.

7. Connecting armature according to one of claims 2 to 6, characterized in that a respective shutoff valve (24, 25) is located at the first branching tube (20) and at the second branching tube (21) between the connecting tube (26) and the discharge connection (5) or supply connection (6), resp.

8. Connecting armature according to one of claims 2 to 7, characterized in that a bypass channel with a spring-loaded safety valve (46) is located in the portion (16) between the branching of the first branching tube (20) and the branching of the second branching tube (21).

9. Connecting armature according to one of claims 2 to 8, characterized in that an impeller (50) of a water meter is located in the second branching tube (21) between the portion (16) and the connecting tube (26) and that the impeller (50) is arranged on a shaft (54) extending in direction of the second branching tube (31) through the portion (16) and being connected with a speed detector (52) on the side of the portion opposite to the second branching tube (21).

10. Connecting armature according to one of claims 2 to 9, characterized in that a metering valve (8) and a metering sleeve (57) annularly receiving an end of the metering valve (8) extending into the portion (16) are provided at the portion (16) between the branching of the second branching tube (21) and the outlet (3).

11. Connecting armature according to one of claims 1 to 10, characterized in that a check valve (19) is located at the inlet (2).

**Revendications**

1. Appareil de robinetterie de raccordement (1) pour installations de préparation d'eau, comprenant un boîtier (15), une arrivée (2) pour l'eau à préparer et un départ (3) pour l'eau préparée, un canal d'arrivée (22), disposé dans le boîtier (15) et relié à l'arrivée (2) et un canal de départ (23) disposé dans le boîtier (15) et relié au départ (3) et un canal de liaison (27) qui relie le canal d'arrivée (22) au canal de départ (23), caractérisé en ce que le canal d'arrivée (22) est relié, à son extrémité qui est la plus éloignée de l'arrivée (2), à un raccord de départ (5) pouvant être relié à l'entrée d'un appareil de préparation d'eau (7), en ce que le canal de départ (23) est relié, à son extrémité qui est la plus éloignée du départ (3), à un raccord d'arrivée (6) pouvant être relié à la sortie de l'appareil de préparation d'eau (7) et en ce que la section du canal de liaison (27) est réglable.

2. Appareil de robinetterie de raccordement selon la revendication 1, caractérisé en ce que le canal d'arrivée (22) s'étend sensiblement parallèlement au canal de départ (23).

3. Appareil de robinetterie de raccordement selon la revendication 2, caractérisé en ce que le boîtier (15) forme une partie tubulaire (16) dont une extrémité forme l'arrivée (2) et dont l'autre extrémité forme le départ (3), par un premier tube de dérivation (20) qui fait saillie latéralement sur la partie (16) et porte à son extrémité libre le raccord de départ (5), un deuxième tube de raccordement (21) qui fait saillie sur la partie (16), parallèlement au premier tube de dérivation (20), entre le premier tube de dérivation (20) et le départ (3), et porte à son extrémité le raccord d'arrivée (6), et un tube de liaison (26) qui relie le premier tube de dérivation (20) au deuxième tube de dérivation (21) en un point compris entre la partie (16) et le raccord de départ (5) ou le raccord d'arrivée (6) respectivement, et qui entoure le canal de liaison (27).

4. Appareil de robinetterie de raccordement selon la revendication 2 ou 3, caractérisé en ce que le canal de liaison (27) comprend une première région (36) qui est adjacente au canal d'arrivée (22) et est munie d'une soupape de régulation (37, 39) et, entre la première région (36) et le canal de départ (23), une deuxième région (45) présentant la configuration d'un diffuseur.

5. Appareil de robinetterie de raccordement selon la revendication 4, caractérisé en ce que la soupape de régulation (37, 39) comprend un cône de soupape (39) et un siège de soupape (37), qui est monté mobile en translation dans le canal de liaison (27) pour se rapprocher ou s'éloigner du cône de soupape (39) et qui est retenu élastiquement à l'encontre du mouvement qui l'éloigne du cône de soupape (39).

6. Appareil de robinetterie de raccordement selon la revendication 5, caractérisé en ce que le siège de soupape (37) est prévu sur une douille (31) montée mobile en translation axiale dans le canal de liaison (27), et en ce que le cône de soupape (39) est fixé à une tige de soupape (41) qui s'étend à travers le canal d'arrivée (22) ou, plus précisément à travers le premier tube de dérivation (20) et est reliée à un dispositif de réglage (42) qui est disposé sur le côté du premier tube de dérivation (20) ou du canal d'arrivée (22) qui est le plus éloigné du canal de liaison (27) ou du tube de liaison (26).

7. Appareil de robinetterie de raccordement selon l'une des revendications 2 à 6, caractérisé en ce que, dans le premier tube de dérivation (20) et le deuxième tube de dérivation (21), sont montés des robinets d'arrêt (24, 25) respectivement, entre le tube de liaison (26) et le raccord de départ (5) ou le raccord d'arrivée (6) respectivement.

8. Appareil de robinetterie de raccordement selon l'une des revendications 2 à 7, caractérisé en ce que dans la partie (16) est disposé, entre le point de branchement du premier tube de dérivation (20) et le point de branchement du deuxième tube de dérivation (21), un canal de dérivation équipé d'une soupape de sûreté (46) à précontrainte élastique.

9. Appareil de robinetterie de raccordement selon l'une des revendications 2 à 8, caractérisé en ce que, dans le deuxième tube de dérivation (21) est agencé, entre la partie (16) et le tube de liaison (26), une roue à ailettes (50) appartenant à un compteur d'eau, et en ce que la roue à ailettes est montée sur un arbre (54) qui s'étend vers le deuxième tube de dérivation (21) en traversant la partie (16) et est relié à un capteur de vitesse de rotation (52) sur le côté de cette partie qui est le plus éloigné du deuxième tube de dérivation (21).

10. Appareil de robinetterie de raccordement selon l'une des revendications 2 à 9, caractérisé en ce que, sur la partie (16) sont prévues, entre le point de branchement du deuxième tube de dérivation (21) et le départ (3), une soupape de dosage (8), et une douille de dosage (57) qui entoure, avec une forme annulaire, une extrémité de la soupape de dosage (8) qui pénètre dans la partie (16).

11. Appareil de robinetterie de raccordement selon l'une des revendications 1 à 10, caractérisé en ce qu'un clapet anti-retour (19) est agencé au droit de l'arrivée (2).

FIG.1

FIG.2

FIG. 3

FIG.4